# EUROPÄISCHE PATENTANMELDUNG

(11) **EP 3 786 576 A1**
(43) Veröffentlichungstag der Anmeldung: **03.03.2021**
(21) Anmeldenummer: 19193534.5
(22) Anmeldetag: 26.08.2019
(51) Int. Cl.: G01B 11/25, G01N 21/64, G01B 11/255, C03B 17/06

(54) **VERFAHREN UND VORRICHTUNG ZUR MESSUNG DER GEOMETRIE EINER GEKRÜMMTEN FLOATGLAS-SCHEIBE MITTELS FLUORESZENZSTRAHLUNG NACH LASERANREGUNG**

(71) Anmelder: SAINT-GOBAIN GLASS FRANCE, 92400 Courbevoie (FR)
(72) Erfinder: NIELSEN, Tobias, 50670 Köln (DE)
(74) Vertreter: Feist, Florian Arno

(57) **Zusammenfassung**

Die vorliegende Erfindung betrifft ein Verfahren zur Messung der Geometrie einer gekrümmten Floatglas-Scheibe (1), welche eine Zinnbadseite (I) und eine Atmosphärenseite (II) aufweist, wobei
a) die Strahlung (S) mindestens eines Lasers (L) auf mindestens zwei Punkte der Zinnbadseite (I) fokussiert wird, wobei Zinnreste (4) zur Fluoreszenz angeregt werden,
b) die Fluoreszenzstrahlung (F) mittels eines Detektors (D) detektiert wird, woraus die räumliche Position der mindestens zwei Punkte bestimmt wird.

## Beschreibung

Die Erfindung betrifft ein Verfahren und eine Vorrichtung zur Messung der Geometrie einer gekrümmten Floatglas-Scheibe.

Im Fahrzeugbereich werden zunehmend hohe Anforderungen an die Geometrie der Fensterscheiben gestellt. Dies betrifft insbesondere die Krümmung der Fensterscheiben, die zu unerwünschten optischen Effekten führen kann, wenn sie von den spezifizierten Werten abweichen. Diese optischen Effekte können beispielsweise optische Verzerrungen bei Durchsicht durch die Fensterscheibe sein oder eine verzerrte Darstellung eines Head-Up-Displays.

Es besteht daher Bedarf an Verfahren zur genauen Messung der Krümmung von gebogenen Glasscheiben, die sich für eine industrielle Massenfertigung eignen. Insbesondere besteht Bedarf an solchen Messverfahren, die sich in industriell übliche Glasbiegeverfahren integrieren lassen. Komplexe Glasscheiben werden typischerweise in mehrstufigen Biegeverfahren gebogen, welche beispielsweise einen Schwerkraftbiegeschritt (Vorbiegung) gefolgt von einem Pressbiegeschritt (Endbiegung) umfassen. Lediglich beispielhaft sei auf EP1836136B1, US2004107729A1, EP0531152A2 und EP1371616A1 verwiesen. Mehrstufige Biegeverfahren können von einer Messung der Krümmung zwischen den Biegeschritten profitieren: die Parameter des nachfolgenden Biegeschritts können an die erreichte Vorbiegung angepasst werden, um eine Endbiegung zu erreichen mit einer verringerten Abweichung von den spezifizierten Krümmungswerten.

Es sind Laserverfahren zur Abstandsmessung bekannt, beispielsweise die Lasertriangulation. Dabei wird die von der Oberfläche des zu vermessenden Objekts reflektierte Laserstrahlung detektiert, wobei aus dem Winkel, unter dem der Lichtpunkt beobachtet wird, der Abstand gemessen wird. Durch Messung zweier oder mehrerer Punkte ließen sich durch solche Verfahren Rückschlüsse ober deren relative Position und damit die Geometrie des Objekts ziehen. Ein solches Laserverfahren ließe sich auch gut in ein Biegeverfahren integrieren, weil kein direkter Kontakt zum Objekt erforderlich ist, sondern die Geometriemessung auf Abstand erfolgt. Allerdings setzen Lasertriangulation und ähnliche Verfahren eine diffuse Reflexion an der Oberfläche des Messobjekts voraus, die bei Glasscheiben nicht im erforderlichen Maß auftritt.

Der vorliegenden Erfindung liegt die Aufgabe zugrunde, ein Verfahren und eine Vorrichtung zur Messung der Geometrie einer gekrümmten Glasscheibe bereitzustellen, die für eine industrielle Anwendung geeignet sind. Insbesondere soll das Verfahren in mehrstufige Biegeverfahren einfach integrierbar sein.

Die Aufgabe der vorliegenden Erfindung wird erfindungsgemäß durch ein Verfahren gemäß Anspruch 1 gelöst. Bevorzugte Ausführungen gehen aus den Unteransprüchen hervor.

Fensterscheiben werden üblicherweise im verbreiteten Floatglasverfahren hergestellt. Dabei wird die Glasschmelze auf ein Bad aus flüssigem Zinn geleitet, wo sie zu einer Glasschicht aushärtet, die anschließend in Glasscheiben zerteilt wird. Eine zwangsläufige Folge dieses Verfahrens ist, dass die beiden Oberflächen der Glasscheibe nicht identisch sind. Man unterscheidet zwischen der Zinnbadseite, die direkten Kontakt zum Zinnbad hatte, und der gegenüberliegenden Atmosphärenseite. Der Unterschied beruht unter anderem darauf, dass Zinnatome während des Aushärtens der Glasscheibe vom Zinnbad in die Glasoberfläche hinein diffundieren. Die Erfindung beruht auf der Erkenntnis, dass diese Zinnreste zur Fluoreszenz angeregt werden können und die diffuse Fluoreszenzstrahlung genutzt werden kann, um die relative Position verschiedener Punkte auf der Glasoberfläche und damit die Krümmungsgeometrie der Glasscheibe zu bestimmen. Im Gegensatz zu direkt reflektierter Laserstrahlung ist die Fluoreszenzstrahlung nicht kohärent, so dass keine störenden Interferenzeffekte ("Speckle", Lasergranulation) zu erwarten sind. Die Messung erfordert keinen direkten Kontakt zur Glasscheibe, sondern erfolgt mit relativ großem Abstand und ist für Durchlaufverfahren geeignet. Dadurch lässt sich das Verfahren gut in industrielle Biegeverfahren integrieren. Das sind große Vorteile der vorliegenden Erfindung.

Das erfindungsgemäße Verfahren dient zur Messung der Geometrie einer gekrümmten Floatglas-Scheibe. Der Ausdruck "Geometrie" bezieht sich hierbei auf die Krümmung der Scheibe. Man könnte daher auch von der Messung der Krümmung, der Krümmungsgeometrie, der gekrümmten Form oder des Krümmungsgrads sprechen. Eine Floatglas-Scheibe weist eine Zinnbadseite und eine Atmosphärenseite auf. Dabei wird diejenige Oberfläche der Scheibe, die beim Floatverfahren mit dem Zinnbad in Kontakt stand, als Zinnbadseite bezeichnet. Die der Zinnbadseite gegenüberliegende Oberfläche, die beim Floatverfahren mit der umgebenden Atmosphäre in Kontakt stand, wird als Atmosphärenseite bezeichnet. Zwischen der Zinnbadseite und der Atmosphärenseite erstreckt sich die umlaufende Kantenfläche (Seitenkante) der Scheibe.

Im erfindungsgemäßen Verfahren wird eine gekrümmte Floatglas-Scheibe bereitgestellt. Zur Messung der Geometrie wird die Strahlung mindestens eines Lasers auf mindestens zwei Punkte (oder Stellen) der Zinnbadseite der Floatglas-Scheibe fokussiert. Dadurch werden Zinnreste, die auf der Zinnbadseite abgelagert sind oder über die Zinnbadseite unter die Scheibenoberfläche diffundiert sind, zur Fluoreszenz angeregt (laserinduzierte Fluoreszenz). Der Laser ist hierfür geeignet ausgewählt. Die Fluoreszenzstrahlung wird mittels eines Detektors (Photodetektor) detektiert, woraus die räumliche Position der mindestens zwei Punkte bestimmt wird. Damit ist die Lage des Ursprungs der Fluoreszenz im Raum gemeint. Die relative Position der mindestens zwei Punkte erlaubt eine Aussage über die Krümmungsgeometrie. Eine solche Aussage kann bereits auf Grundlage zweier Messpunkte getroffen werden. Durch Erhöhung der Messpunkte sind genauere Aussagen über die Scheibengeometrie möglich.

Die Bestimmung der räumlichen Position der Messpunkte erfordert insbesondere auch die Bestimmung des Abstands der Messpunkte zum Detektor. Hieraus kann die Lage im Raum ermittelt werden, wenn die laterale Position entweder durch die Positionierung des Lasers bekannt ist oder ebenso gemessen wird.

Unter einem Punkt wird im Sinne der Erfindung ein Messpunkt gemäß einer näherungsweise punktförmig fokussierten Laserstrahlung (Laserpunkt, Laserspot) verstanden. Der Punkt ist also kein Punkt im mathematischen Sinne, sondern eine Fläche, die der Ausdehnung der punktartig fokussierten Laserstrahlung entspricht und daher vom fokussierenden optischen Element (Linse, insbesondere sphärische Sammellinse) abhängig ist. Die mindestens zwei Messpunkte können diskret sein, also voneinander beabstandet, wobei zwischen den Messpunkten keine Laserstrahlung auf die Glasscheibe tritt. Die beiden diskreten Messpunkte können simultan oder sequentiell (also nacheinander) bestrahlt werden. Es ist auch möglich, mit einem einzelnen Laserspot zu arbeiten, wobei eine Relativbewegung zwischen Laserstrahlung und Floatglas-Scheibe auftritt, so dass ein linienartiger Bereich der Zinnbadseite vom Laserspot überstrichen wird. Dann wird eine Vielzahl von Messpunkten sequentiell bestrahlt. Es kann alternativ aber auch simultan ein größerer Bereich bestrahlt werden, der dann eine Vielzahl von Messpunkten umfasst. So kann insbesondere mit einer Laserlinie, also einem linienartigen Strahlungsfokus gearbeitet werden. Eine solche Laserlinie (beziehungsweise die dadurch angeregte Fluoreszenzlinie) kann als Vielzahl benachbarter Messpunkte aufgefasst werden. Anders ausgedrückt enthält eine Laserlinie beziehungsweise Fluoreszenzlinie eine Vielzahl von Messpunkten im Sinne der Erfindung.

Das Verfahren kann statisch durchgeführt werden. Damit wird eine Durchführung bezeichnet, bei der die Glasscheibe während der Messung ortsfest positioniert ist. Dabei kann auch die Laserstrahlung auf der Glasscheibe ortsfest sein. Ortsfest bedeutet, dass die Laserstrahlung nicht in Längen- oder Breitenrichtung der Glasscheibe bewegt wird. Es kann dabei mit mindestens zwei Laserspots gearbeitet werden. Idealerweise wird eine Vielzahl von Messpunkten rasterartig über die Glasscheibe verteilt, um eine möglichst genaue Messung des Krümmungsprofils zu ermöglichen. Die Messpunkte können simultan mit mehreren Lasern oder der aufgeteilten Strahlung eines einzelnen Lasers vermessen werden oder sequentiell, das heißt nacheinander bevorzugt mit demselben Laser. Es kann auch eine Laserlinie verwendet werden, worunter eine linienartig fokussierte Laserstrahlung verstanden wird. Die Laserlinie erstreckt sich bevorzugt über die gesamte Breite der Glasscheibe (oder es werden kleinere Laserlinien mehrerer Laser verwendet, die einander benachbart sind, so dass insgesamt die gesamte Breite der Glasscheibe abgedeckt wird). Bevorzugt werden mehrere zueinander beabstandete und parallele Laserlinien verwendet. Die Messung mit zwei oder mehreren Laserspots führt zu zwei oder mehreren gemessenen Positionspunkten, die Messung mit einer oder mehrerer Laserlinien zu einem oder mehreren linienartigen Krümmungsprofilen (Profillinien, Linienprofile) entlang der Laserlinie(n).

Bei der statischen Durchführung ist es aber auch möglich, die Laserstrahlung über die Glasscheibe zu bewegen, insbesondere mittels einer geeigneten Laser-Scanvorrichtung, beispielsweise unter Verwendung zweier kippbarer Spiegel. Dabei kann mit einem einzelnen Laserspot gearbeitet werden, welche bevorzugt über die gesamte Länge der Glasscheibe bewegt wird. Dies führt zur Messung eines Linienprofils. In einer vorteilhaften Ausführung werden mehrere Laserspots verwendet, die entlang einer Linie über die Breite der Glasscheibe verteilt angeordnet sind. Diese Messpunkte werden über die Glasscheibe bewegt, bevorzugt entlang der gesamten Länge der Glasscheibe. So können voneinander beabstandete Linienprofile der Krümmungsgeometrie bestimmt werden. Das Verfahren kann mit einer Laserlinie eines Lasers durchgeführt werden, welche bevorzugt die gesamte Breite der Glasscheibe abdeckt (oder mit kleineren Laserlinien mehrerer Laser, die einander benachbart sind, so dass insgesamt die gesamte Breite der Glasscheibe abgedeckt wird).

Wird die Laserlinie dann über die gesamte Glasscheibe bewegt (senkrecht zu ihrer Erstreckungsrichtung), so kann ein kontinuierliches oder quasikontinuierliches Krümmungsprofil der gesamten Scheibe erstellt werden.

Bei der statischen Durchführung hat die Variante mit ortsfester Laserstrahlung den Vorteil, dass sie ohne eine komplexe und potentiell störungsanfällige Scanvorrichtung auskommt. Die Variante mit bewegter Laserstrahlung hat dagegen den Vorteil, dass sie mit einer geringeren Anzahl an Lasern (beziehungsweise mit einem geringeren technischen Aufwand zur Aufteilung der Laserstrahlung) zu einem genauen Messergebnis kommt.

Das Verfahren kann alternativ zur statischen Durchführung auch als Durchlaufverfahren durchgeführt werden, wobei die Glasscheibe unter der Laserstrahlung bewegt wird. Darunter wird eine Bewegung der Glasscheibe verstanden, wobei die Laserstrahlung ortsfest verbleibt (also auf denselben Punkt oder dieselbe Fläche im Raum gerichtet ist), so dass die Scheibenoberfläche von der Laserstrahlung überstrichen wird. Wird die Glasscheibe unter der Laserstrahlung bewegt, so überstreicht die Laserstrahlung die Glasscheibe entlang ihrer gesamten Länge. Unter der Länge wird dabei die Dimension in Bewegungsrichtung der Glasscheibe bezeichnet. Während der Bewegung der Glasscheibe unter der Laserstrahlung wird die Fluoreszenzstrahlung mittels des Detektors detektiert, um die räumliche Position des bestrahlten Bereichs ortsabhängig entlang des von Laserstrahlung überstrichenen Bereichs zu bestimmen. Die möglichen Ausgestaltungen der Laserstrahlung (Laserfokus/- foki) entspricht dabei denjenigen der statischen Durchführung mit bewegter Laserstrahlung. Es kann also ein einzelner Laserspot verwendet werden (Messung einer Profillinie), mehrere entlang einer Linie über die Breite der Glasscheibe verteilte Laserspots (Messung mehrerer paralleler Profillinien) oder eine Laserlinie, welche sich bevorzugt über die gesamte Breite der Glasscheibe erstreckt (Messung eines kontinuierlichen oder quasikontinuierlichen Gesamtkrümmungsprofils).

Die Ausführung im Durchlaufverfahren ist gegenüber der statischen Ausführung bevorzugt, weil sie sich besonders gut in industrielle Prozesse integrieren lässt, insbesondere in mehrstufige Biegeverfahren, wo die Glasscheibe typischerweise von einer ersten Biegestation zu einer zweiten Biegestation bewegt wird. Sollte ein Durchlaufverfahren nicht realisiert werden können, beispielsweise weil die Glasscheibe während des Transports zu sehr wackelt, so kann der Transport auch gestoppt werden und das Verfahren statisch durchgeführt werden.

Der Laser muss zur Fluoreszenzanregung der Zinnreste in oder auf der Glasscheibe geeignet sind. Hierzu eignen sich insbesondere Laser, deren Strahlung eine Wellenlänge im UV-Spektralbereich von höchstens 360 nm aufweist. Besonders bevorzugt wird Strahlung im UV-Bereich von 240 nm bis 355 nm verwendet, ganz besonders bevorzugt von 240 nm bis 300 nm, insbesondere im UV-C-Bereich von 240 nm bis 280 nm. Bei Wellenlängen in den genannten Bereichen weisen die Zinnreste eine ausreichend hohe Fluoreszenzquantenausbeute auf, so dass die Fluoreszenzstrahlung als Grundlage für eine Geometriemessung verwendet werden kann. Bei Wellenlängen kleiner 240 nm ist die Fluoreszenzquantenausbeute der Zinnreste zwar noch höher, jedoch können mitunter störende Effekte auftreten, wie eine geringe Lebensdauer der Komponenten, die Bildung von Ozon im Biegeofen, eine hohe Absorption der Floatglas-Scheibe und der Bedarf an großen und teuren Excimerlasern.

Der Laser kann gepulst oder im Dauerstrichmodus betrieben werden. Gepulste Laser sind bevorzugt, weil sie kostengünstiger erhältlich sind, insbesondere im UV-C-Bereich. Dabei sollte mit einer hohen Pulsrate (Pulsfolgefrequenz) gearbeitet zu werden, damit keine eine Synchronisation des Detektors mit der Laserstrahlung erforderlich wird. Die Pulsrate beträgt beispielsweise mindestens 100 Hz, bevorzugt mindestens 1 kHz. Auch bei einem Dauerstrichbetrieb wäre eine unerwünschte Synchronisation des Detektors nicht nötig.

Der Laser ist nicht auf eine bestimmte Bauart beschränkt. Es kann beispielsweise ein "frequenzverdreifachter" (355 nm; Summenfrequenzmischung der Fundamentalstrahlung mit der frequenzverdoppelten Strahlung; dritte Harmonische) oder zweifach frequenzverdoppelter (266 nm; vierte Harmonische; Frequenzverdopplung der zweiten Harmonischen) Nd:YAG-Laser verwendet werden, der für industrielle Anwendungen verbreitet ist (Fundamentalstrahlung 1064 nm). Alternativ eignet sich ein Yb:YAG-Laser (Fundamentalstrahlung 1030 nm), der ebenfalls verbreitet ist. Aber auch andere Laserarten können eingesetzt werden, beispielsweise Diodenlaser, Excimerlaser oder Farbstofflaser.

Bei Durchlaufverfahren beträgt die Bewegungsgeschwindigkeit der Glasscheibe bevorzugt von 0,5 m/s bis 5 m/s, besonders bevorzugt von 1 m/s bis 2 m/s. Solche Bewegungsgeschwindigkeiten sind bei industriellen Biegeverfahren üblich. Wird das Verfahren statisch mit bewegter Laserstrahlung durchgeführt, so beträgt die Bewegungsgeschwindigkeit der Laserstrahlung (Scangeschwindigkeit) bevorzugt von 5 m/s bis 20 m/s. So lässt sich mit geringem Zeitaufwand eine Geometriemessung durchführen.

Die minimale Ausdehnung des Fokus der Laserstrahlung (also der Durchmesser eines Laserspots oder die Linienbreite einer Laserlinie) betragen bevorzugt von 0,2 mm bis 1 mm, besonders bevorzugt von 0,3 mm bis 0,7 mm. Dieser Bereich ist besonders vorteilhaft im Hinblick auf Strahlungsintensität und Auflösungsvermögen.

Die Laserstrahlung trifft bevorzugt im Wesentlichen senkrecht auf die Floatglasscheibe. Damit ist gemeint, die optische Achse (also die Ausbreitungsrichtung der Laserstrahlung) parallel zur Flächennormalen im geometrischen Zentrum der gekrümmten Floatglas-Scheibe verläuft. Der Detektor ist bevorzugt auf der gleichen Seite der Floatglas-Scheibe angeordnet, wobei die Detektionsrichtung typischerweise einen Winkel zwischen 0° und 90° zur Flächennormalen im geometrischen Zentrum einschließt, beispielsweise von 20° bis 70°. Die senkrechte Bestrahlung ist bevorzugt, da die gekrümmte Geometrie der Scheibe mitunter eine spezielle Auslegung der Fokusanordnung erfordert, was in diesem Falle einfacher zu bewerkstelligen ist. Dies ist insbesondere der Fall bei Verwendung von Laserstrahlung mit linienförmigem Fokus (Laserlinie).

Die Geometrie der Glasscheibe kann erfindungsgemäß auf verschiedene Arten mittels der laserinduzierten Fluoreszenzstrahlung bestimmt werden. In einer ersten bevorzugten Ausführung wird die Strahlung des mindestens einen Lasers auf die Zinnbadseite fokussiert, so dass mindestens zwei Messpunkte simultan bestrahlt werden. Als Detektor wird eine 3D-Kamera verwendet. Eine 3D-Kamera ist eine Kamera, die dreidimensionale Bilder aufnehmen kann. Neben der Position der Bildpunkte in der Bildebene enthält ein solches dreidimensionales Bild also auch eine Information über den Abstand der Bildpunkte von der Kamera. Der zur Berechnung der räumlichen Lage der Bildpunkte erforderliche Prozessor ist bevorzugt in der Kamera integriert, kann aber auch in einen mit der Kamera verbundenen Rechner integriert sein. Es können verschiedene, an sich bekannte Systeme von 3D-Kameras verwendet werden, beispielsweise Stereokameras, Triangulationssysteme oder Lichtfeldkameras. Mit der 3D-Kamera wird die Fluoreszenzstrahlung der mindestens zwei Punkte simultan detektiert, wodurch ein dreidimensionales Bild erzeugt wird. Dadurch ist die Position der mindestens zwei Punkte bestimmbar, insbesondere ihre relative Position zueinander, was eine Aussage über die Krümmung der Glasscheibe erlaubt.

Bei der ersten Ausführungsform trifft die Laserstrahlung bevorzugt im Wesentlichen senkrecht auf die Glasscheibe, dies ist aber nicht zwingend erforderlich. Die Laserstrahlung kann grundsätzlich mit jedem beliebigen Winkel zur Flächennormalen (im geometrischen Zentrum der Glasscheibe) von 1° bis 90° auf die Glasscheibe treffen. Entscheidend ist der Winkel zwischen dem Anregungsstrahlengang und dem Detektionsstrahlengang. Je größer dieser Winkel ist, desto besser die Auflösung des Messverfahrens. Der Winkel zwischen Anregungsstrahlengang und dem Detektionsstrahlengang beträgt bevorzugt von 10° bis 170° und kann vom Fachmann den Erfordernissen und Beschränkungen im Anwendungsfall entsprechend gewählt werden.

Die erste bevorzugte Ausführung kann statisch, also mit ortsfester Glasscheibe, oder in einem Durchlaufverfahren durchgeführt werden. Bei der statischen Durchführung können zwei oder mehrere voneinander getrennte Messpunkte (Laserspots) verwendet werden, die die Scheibe simultan bestrahlen, oder eine oder mehrere Laserlinien, die sich idealerweise über die gesamte Länge oder Breite der Glasscheibe erstrecken. Die Laserstrahlung kann auch über die ortsfeste Glasscheibe bewegt werden, um zu einer genaueren Messung zu gelangen. So können zwei oder mehrere voneinander getrennte Messpunkte über die Breite der Glasscheibe verteilt sein (entlang einer Linie, die sich entlang der Breitendimension der Scheibe erstreckt) und über die Länge der Glasscheibe bewegt werden. Ebenso kann eine Laserlinie verwendet werden, die sich über die Breite der Glasscheibe erstreckt und über die Länge der Glasscheibe bewegt wird. Durch fortlaufende Messung mit der 3D-Kamera erhält man so parallele Linienprofile entlang der Länge der Glasscheibe (im Falle der getrennten Messpunkte) oder ein Gesamtprofil in der Längen- und Breitendimension (im Falle der Laserlinie). Bei einer Durchführung im Durchlaufverfahren können ebenfalls zwei oder mehrere voneinander getrennte Messpunkte über die Breite der Glasscheibe verteilt sein oder eine Laserlinie verwendet werden. Die Beobachtungen entsprechen der statischen Durchführung mit bewegter Laserstrahlung, wobei die Relativbewegung hier durch die Bewegung der Glasscheibe unter der ortsfesten Laserstrahlung erfolgt. Das Durchlaufverfahren ist bevorzugt, weil es sich vorteilhaft in industrielle Verfahren, insbesondere Biegeverfahren integrieren lässt, wo die Glasscheiben typischerweise zwischen den einzelnen Biegestationen bewegt werden.

Bei Durchführungen mit einer Relativbewegung zwischen Scheibe und Laserstrahlung wird mit Länge die Dimension in Bewegungsrichtung bezeichnet, mit Breite die Dimension senkrecht dazu. Bei rein statischen Durchführungen sind die Begriffe Länge und Breite austauschbar.

In einer zweiten bevorzugten Ausführung wird der Fokus der Laserstrahlung entlang der optischen Achse der Laserstrahlung (also entlang der Ausbreitungsrichtung im Wesentlichen senkrecht zur Zinnbadseite) durch die Floatglas-Scheibe über die Zinnbadseite bewegt. Der Fokus überstreicht dabei die Scheibenoberfläche (Zinnbadseite). Dabei wird die Fluoreszenzstrahlung mit dem Detektor kontinuierlich detektiert, so dass die Position der Scheibenoberfläche (genauer gesagt des jeweiligen Messpunkts) bestimmt werden kann. Dies wird simultan oder sequentiell mit punktförmig fokussierter Laserstrahlung an zwei oder mehr Messpunkten durchgeführt. Ist die Position der zwei oder mehr Messpunkte bekannt, insbesondere ihre relative Position zueinander, so ist eine Aussage über die Krümmung der Glasscheibe möglich.

Bei der zweiten bevorzugten Ausführung muss die Laserstrahlung im Wesentlichen senkrecht auf die Glasscheibe treffen.

Die zweite bevorzugte Ausführung kann statisch, also mit ortsfester Glasscheibe, oder in einem Durchlaufverfahren durchgeführt werden. Bei der statischen Durchführung können zwei oder mehrere voneinander getrennte Messpunkte (Laserspots) verwendet werden. Die Laserstrahlung kann auch über die ortsfeste Glasscheibe bewegt werden, um zu einer genaueren Messung zu gelangen, wobei mindestens ein Laserspot nötig ist, bevorzugt mehrere über die Scheibenbreite verteilte Laserspots. Die Scangeschwindigkeit des Lasersystems entlang der optischen Achse muss gegenüber der Bewegungsgeschwindigkeit der Glasscheibe hoch sein, damit der Versatz der Glasscheibe während der Positionsbestimmung näherungsweise vernachlässigbar wird. So erhält man ein Linienprofil oder mehrere parallele Linienprofile entlang der Länge der Glasscheibe. Bei einer Durchführung im Durchlaufverfahren können ebenfalls ein Laserspot oder mehrere voneinander getrennte, über die Scheibenbreite verteilte Laserspots verwendet werden. Die Beobachtungen entsprechen der statischen Durchführung mit bewegter Laserstrahlung, wobei die Relativbewegung hier durch die Bewegung der Glasscheibe unter der ortsfesten Laserstrahlung erfolgt. Das Durchlaufverfahren ist bevorzugt, weil es sich vorteilhaft in industrielle Verfahren, insbesondere Biegeverfahren integrieren lässt, wo die Glasscheiben typischerweise zwischen den einzelnen Biegestationen bewegt werden.

In der zweiten bevorzugten Ausführung können zur Bestimmung der Position der Scheibenoberfläche verschiedene Prinzipien angewandt werden. In einer ersten Variante der zweiten bevorzugten Ausführung wird die Tatsache ausgenutzt, dass die Fluoreszenzintensität am höchsten ist, wenn der Laser auf die Oberfläche (Zinnbadseite) fokussiert ist, wo sich die Zinnreste befinden. Während der Bewegung der Laserstrahlung (z-Scan) wird mittels des Detektors die Fluoreszenzintensität gemessen. Ist das Maximum der Fluoreszenzintensität erreicht, so ist die Laserstrahlung auf die Scheibenoberfläche fokussiert, deren Position somit bestimmbar wird. Die Position der mindestens zwei Messpunkte wird also durch Messung der maximalen Intensität der Fluoreszenzstrahlung bestimmt. Als Detektor kann jeder Photodetektor verwendet werden, der die Intensität der Fluoreszenzstrahlung messen kann, also rein intensitätsbestimmende Detektoren wie Photodioden oder Photomultiplier oder ortsaufgelöste Photodetektoren wie CCD- oder CMOS-Sensoren oder Photodioden-Arrays. Für die erste Variante sollte sich die Fluoreszenz nicht in Sättigung befinden, und die Intensität der Laserstrahlung muss geeignet gering gewählt werden.

In einer zweiten Variante der zweiten bevorzugten Ausführung wird während der Bewegung der Laserstrahlung (z-Scan) mit einem ortsaufgelösten Photodetektor die Ausdehnung der fluoreszierenden Fläche beobachtet. Ist die minimale Ausdehnung der fluoreszierenden Fläche erreicht, so ist die Laserstrahlung auf die Scheibenoberfläche fokussiert, deren Position somit bestimmbar wird. Die Position der Zinnbadseite wird also durch Messung der fluoreszierenden Fläche bestimmt. Als Detektor wird ein ortsaufgelöster Photodetektor verwendet wie CCD- oder CMOS-Sensoren oder Photodioden-Arrays. Die zweite Variante kann auch dann durchgeführt werden und ist dann besonders wirksam, wenn die Intensität der Laserstrahlung so hoch ist, dass sich die Fluoreszenz in Sättigung befindet.

Das erfindungsgemäße Verfahren zur Geometriemessung ist in einer bevorzugten Ausführung in ein mehrstufiges Biegeverfahren integriert. Es wird dabei zwischen zwei Biegeschritten durchgeführt. Das Verfahren wird bevorzugt als Durchlaufverfahren durchgeführt, während die Glasscheibe von einer ersten Biegestation zu einer zweiten Biegestation transportiert wird. Die Glasscheibe kann dabei beispielsweise direkt auf einem Fördersystem aufliegen, beispielsweise einem Rollen- oder Bandfördersystem, oder auf einer Trägerform, welche ihrerseits beispielsweise durch ein Rollen-, Schienen- oder Bandfördersystem bewegt wird. In der ersten Biegestation wird ein erster Biegeschritt durchgeführt, in der zweiten Biegestation ein zweiter Biegeschritt. Beispielsweise kann es sich beim ersten Biegeschritt um ein Schwerkraftbiegen handeln, mit dem eine Vorbiegung der Glasscheibe erreicht wird, und beim zweiten Biegeschritt um ein Press- und/oder Saugbiegen, mit dem die endgültige Form der Scheibe erreicht wird (Endbiegung). Solche mehrstufigen Biegeverfahren sind typischerweise einer nicht unerheblichen Streuung hinsichtlich der Scheibengeometrie unterworfen. Die Anwendung des erfindungsgemäßen Verfahrens zwischen den beiden Biegeschritten hat den Vorteil, dass das Ausmaß der Vorbiegung bestimmt werden kann. Bevorzugt werden dann in Abhängigkeit von der gemessenen Vorbiegung die Parameter des nachfolgenden Biegeschritts angepasst (beispielsweise Biegetemperatur oder Pressdruck), um die Abweichung von der spezifizierten Scheibenform und die Streuung der endgebogenen Scheiben zu verringern.

Bei der Anwendung in Biegeverfahren kann die thermische Strahlung der Biegeöfen die Fluoreszenzmessung stören. Daher wird in einer vorteilhaften Ausführung zur Detektion der Fluoreszenzstrahlung mittels des Detektors ein optischer Filter verwendet, der Strahlung blockt, welche langwelliger ist als seine Filterkante. Diese Filterkante des optischen Filters liegt bevorzugt bei höchstens 600 nm, besonders bevorzugt von 500 nm bis 600 nm. Damit wird die Fluoreszenz der Zinnreste größtenteils transmittiert und die thermische Strahlung üblicher Biegeöfen überwiegend herausgefiltert. Der optische Filter ist zwischen Glasscheibe und Detektor im Strahlengang des Detektors angeordnet, so dass die durch den Detektor aufgenommen Strahlung zunächst durch den Filter verläuft. Als optischer Filter kann ein Kurzpassfilter oder ein Bandpassfilter verwendet werden. Ein Kurzpassfilter weist eine Filterkante auf, wobei langwelligere Strahlung geblockt und kurzwelligere Strahlung transmittiert wird. Ein Bandpassfilter weist zusätzlich eine weitere Filterkante bei kürzeren Wellenlängen auf, wobei kurzwelligere Strahlung geblockt wird. Der Bandpassfilter lässt also nur Strahlung im Wellenlängenbereich zwischen den beiden Filterkanten passieren. Statt eines Bandpassfilters kann auch eine Kombination eines Kurzpassfilters und einer Langpassfilters verwendet werden.

Biegeverfahren für Bestandteile von Verbundscheiben wie beispielsweise Windschutzscheiben werden mitunter derart durchgeführt, dass die beiden Einzelscheiben, die später miteinander verbunden werden sollen, aufeinander liegend simultan kongruent gebogen werden. Dadurch soll die Form der Einzelscheiben besonders gut aufeinander abgestimmt werden. Es ist ein Vorteil der vorliegenden Erfindung, dass das Messverfahren auch auf zwei aufeinanderliegende Floatglasscheiben angewendet werden kann, und ihre Geometrie zeitgleich gemessen werden kann. Die anregende Laserstrahlung tritt durch die Scheiben hindurch und kann Fluoreszenz auf beiden Zinnbadseiten anregen. Die Zinnbadseiten der beiden Scheiben sind dabei bevorzugt voneinander abgewandt.

Die Erfindung umfasst auch ein Biegeverfahren mit mindestens folgenden Verfahrensschritten:
1. Vorbiegung der Floatglas-Scheibe in einem ersten Biegeschritt
2. Messung der Geometrie der Floatglas-Scheibe mit dem erfindungsgemäßen Verfahren,
3. Biegung der Floatglas-Scheibe in einem zweiten Biegeschritt, dessen Parameter bevorzugt an die gemessene Vorbiegung angepasst werden.
Vor dem ersten oder nach dem zweiten Biegeschritt können optional weitere Biegeschritte erfolgen.

Die Erfindung umfasst außerdem eine Vorrichtung zur Messung der Geometrie einer gekrümmten Floatglas-Scheibe, welche eine Zinnbadseite und eine Atmosphärenseite aufweist, umfassend
- einen Laser, dessen Strahlung geeignet ist, auf mindestens zwei Punkte der Zinnbadseite fokussiert zu werden und dabei Zinnreste zur Fluoreszenz anzuregen,
- einen auf die mindestens zwei Punkte gerichteten Detektor, der geeignet ist, die Fluoreszenzstrahlung zu detektieren,
- eine Auswerteeinheit, die geeignet ist, aus der Fluoreszenzstrahlung die räumliche Position der mindestens zwei Punkte zu bestimmen.

Die vorstehenden Ausführungen im Zusammenhang mit dem erfindungsgemäßen Verfahren gelten für die erfindungsgemäße Vorrichtung entsprechend.

Da das Verfahren bevorzugt als Durchlaufverfahren durchgeführt wird, umfasst die Vorrichtung bevorzugt Mittel zum Bewegen der Scheibe. Die Mittel sind geeignet, die Glasscheibe unter der Laserstrahlung zu bewegen, so dass die Glasscheibe bevorzugt entlang ihrer gesamten Länge (in Bewegungsrichtung) mit der Laserstrahlung beaufschlagt wird.

Die Erfindung umfasst ferner eine Vorrichtung zum Biegen von Floatglas-Scheiben, umfassend
- eine erste Biegestation
- eine erfindungsgemäße Vorrichtung zur Messung der Geometrie der Floatglas-Scheibe,
- eine zweite Biegestation,
- Mittel zum (insbesondere kontinuierlichen) Bewegen der Floatglas-Scheibe von der ersten Biegestation durch die erfindungsgemäße Vorrichtung zur zweiten Biegestation.

Die Bewegungsmittel können beispielsweise als Schienen-, Rollen- oder Bandfördersystem ausgebildet sein. Die Glasscheibe kann direkt auf dem Fördersystem aufliegen (insbesondere bei Rollen- oder Bandfördersystem) oder auf einer Trägerform aufliegen. Die Trägerform ist insbesondere als sogenannte Rahmenform ausgebildet mit einer rahmenartigen Kontaktfläche, auf der ein umlaufender Randbereich der Glasscheibe aufliegt, während der Großteil der Glasscheibe keinen direkten Kontakt zur Trägerform aufweist.

Die Floatglas-Scheibe besteht bevorzugt aus Kalk-Natron-Glas, wie es für Fensterscheiben üblich ist. Die Dicke der Floatglas-Scheibe kann den Anforderungen im Einzelfall entsprechend frei gewählt werden. Typische Dicken liegen im Bereich von 1 mm bis 20 mm, insbesondere 1,5 mm bis 5 mm.

Die Floatglas-Scheibe wird bevorzugt als Fahrzeugscheibe verwendet oder als Bestandteil einer solchen, insbesondere als Windschutzscheibe, Seitenscheibe, Heckscheibe oder Dachscheibe eines Kraftfahrzeugs oder als Bestandteil einer solchen (im Falle von Verbundscheiben). Die Floatglas-Scheibe wird besonders bevorzugt verwendet als Windschutzscheibe eines Fahrzeugs, insbesondere Kraftfahrzeugs, wo besonders hohe Anforderungen an die optische Qualität gestellt werden. Das erfindungsgemäße Verfahren ist dabei besonders vorteilhaft, weil es die Herstellung von Glasscheiben mit besonders abweichungsarmer Krümmungsgeometrie ermöglicht, wodurch störende optische Effekte wie Verzerrungen verringert werden.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: Draufsichten auf Floatglas-Scheiben bei verschiedenen Ausführungsformen des erfindungsgemäßen Verfahrens zur Messung ihrer Geometrie,
- Fig. 2: einen Querschnitt durch eine Floatglas-Scheibe,
- Fig. 3: einen Querschnitt durch eine Floatglas-Scheibe während einer Ausführungsform des erfindungsgemäßen Verfahrens,
- Fig. 4: einen Querschnitt durch eine Floatglas-Scheibe während der Bestimmung der Position der Scheibenoberfläche in einer Variante des Verfahrens nach Figur 3,
- Fig. 5: einen Querschnitt durch eine Floatglas-Scheibe während einer weiteren Ausführungsform des erfindungsgemäßen Verfahrens,
- Fig. 6: ein Diagramm der Fluoreszenzquantenausbeute der Zinnreste,
- Fig. 7: Spektren der Fluoreszenzstrahlung einer Floatglas-Scheibe und der Wärmestrahlung eines Biegeofens,
- Fig. 8: einen Querschnitt durch eine Biegevorrichtung mit integrierter erfindungsgemäßer Messvorrichtung.

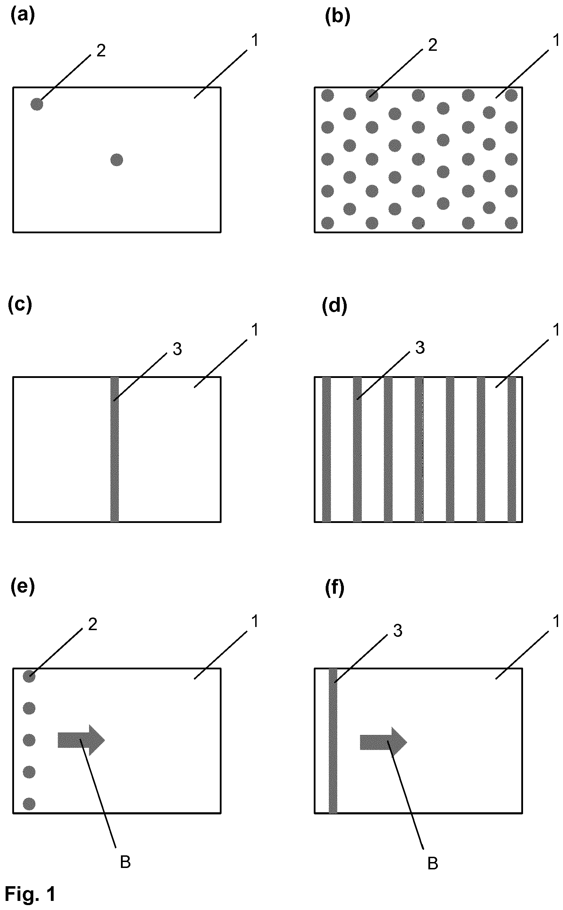

Figur 1 zeigt verschiedene Ausführungen des erfindungsgemäßen Verfahrens in einer Draufsicht auf die Floatglas-Scheibe 1. Die Ausführungen unterscheiden sich durch die Art und Weise, wie die Laserstrahlung auf die Floatglas-Scheibe 1 fokussiert wird.

Um eine Aussage über die Geometrie, genauer gesagt den Krümmungsgrad der Floatglas-Scheibe 1 treffen zu können, muss die Position mindestens zweier Punkte auf der Scheibenoberfläche bestimmt werden. Aus der relativen Positionierung dieser Punkte zueinander ergibt sich die Krümmung. Die Erfindung nutzt die Tatsache, dass eine Floatglas-Scheibe 1 Zinnreste aufweist, die im Floatglas-Verfahren unter die Oberfläche der Zinnbadseite diffundieren oder an der Oberfläche anhaften. Diese Zinnreste können mittels Laserstrahlung zur Fluoreszenz angeregt werden. Die Fluoreszenzstrahlung kann mit verschiedenen Methoden, die nachstehend beschrieben werden, genutzt werden, um ihren Ursprung zu bestimmen. Die Analyse der Fluoreszenzstrahlung zweier Punkte auf der Scheibenoberfläche lässt sich deren relative Positionierung zueinander bestimmen. Der Vergleich der relativen Positionierung mit den entsprechenden spezifizierten Werten lässt eine Aussage darüber zu, inwieweit die Scheibenkrümmung von der Spezifikation aufweicht.

Durch Erhöhung der Anzahl der Messpunkte ist eine präzisere und aussagekräftigere Messung des Krümmungsgrads möglich.

Es müssen mindestens zwei Messpunkte zur Fluoreszenz angeregt werden. Dies kann im einfachsten Fall mit zwei voneinander beabstandeten Laserspots 2 erfolgen (Figur 1a). Dies führt zu zwei voneinander beabstandeten Ausgangspunkten von Fluoreszenzstrahlung, deren Position im Raum bestimmt und miteinander verglichen werden kann. Wird eine Vielzahl von Messpunkten herangezogen, die jeweils mit einem Laserspot 2 angeregt werden und idealerweise rasterartig über die Scheibenoberfläche verteilt sind (Figur 1b), ergibt sich eine detailreiche Analyse der Scheibenkrümmung anhand separater Positionspunkte.

Statt Laserspots 2 kann auch eine Laserlinie 3 verwendet werden. Der Laserfokus ist dabei in Form eine Linie fokussiert, die sich idealerweise über die gesamte Breite der Floatglas-Scheibe 1 erstreckt (Figur 1c). Die Laserlinie 3 kann als die Überlagerung oder Aneinanderreihung einer Vielzahl von Messpunkten ausgefasst werden, so dass die Laserlinie 3 die erfindungsgemäß erforderlichen mindestens zwei Messpunkte enthält. Die linienförmige Ausgangsfläche der dadurch hervorgerufenen Fluoreszenzstrahlung kann analysiert werden, um die gekrümmte Form dieser Ausgangsfläche im Raum zu bestimmen. Es ergibt sich eine Profillinie entlang der Laserlinie 3. Auf hier kann die Aussagekraft der Messung dadurch erhöht werden, dass eine Vielzahl von Laserlinien 3 verwendet wird, die sich idealerweise parallel zueinander und in gleichmäßigem Abstand zueinander über die gesamte Breite der Floatglas-Scheibe 1 erstrecken (Figur 1d). Es ergibt sich eine entsprechende Vielzahl von parallelen Profillinien, aus denen das Krümmungsprofil der Floatglas-Scheibe 1 gut bestimmt werden kann.

Das erfindungsgemäße Verfahren kann auf verschiedene Weise durchgeführt werden. Es kann zum einen statisch durchgeführt werden, worunter eine Messung bei ortsfester Floatglas-Scheibe 1 verstanden wird. Hierbei sind wieder zwei Varianten zu unterscheiden, nämlich einerseits eine Messung bei ortsfester Laserstrahlung (rein statisch) und eine Messung, bei der die Laserstrahlung über die Scheibenoberfläche bewegt wird (statisch mit bewegter Laserstrahlung). Das Verfahren kann zum anderen aber auch als Durchlaufverfahren angewandt werden, wobei die Laserstrahlung ortsfest ist und die Scheibe unter der Laserstrahlung, also relative zur Laserstrahlung bewegt wird, so dass die Laserstrahlung die Floatglas-Scheibe 1 idealerweise entlang ihrer gesamten Länge überstreicht. Dies ermöglicht eines Krümmungsprofils entlang des von Laserstrahlung überstrichenen Bereichs der Scheibenoberfläche.

Die Verteilung der Laserfoki gemäß der Figuren 1a, 1b, 1c und 1d sind geeignet für die rein statische Messung (Scheibe und Laserfoki ortsfest). Bei der statischen Durchführung mit bewegter Laserstrahlung und der Durchführung als Durchlaufverfahren kann wiederum mit einem oder mehreren Laserspots 2 oder mit einer Laserlinie 3 gearbeitet werden. Bevorzugt werden mehrere Laserspots 2 verwendet, die entlang einer Linie, die sich entlang der Breite der Floatglas-Scheibe 1 erstreckt, aufgereiht und idealerweise gleichmäßig verteilt sind (Figur 1e). Überstreicht die Laserstrahlung die Scheibenoberfläche entlang ihrer Länge und wird über die Fluoreszenzstrahlung dabei kontinuierlich oder quasikontinuierlich die Position der Scheibenoberfläche im Raum bestimmt, so führt jeder Laserspot 2 zu einer Profillinie entlang der Längendimension der Floatglas-Scheibe 1 (Dimension der Bewegungsrichtung). Grundsätzlich ist ein einzelner Laserspot 2 ausreichend, der dann einen linienförmigen Bereich überstreicht. Dieser Bereich kann wiederum als eine Überlagerung oder Aneinanderreihung einer Vielzahl von Messpunkten angesehen werden, so dass die erfindungsgemäß erforderlich mindestens zwei Messpunkte zur Fluoreszenz angeregt werden. Die Verwendung mehrere Laserspots 2 führt zu einer genaueren Messung mit mehreren Längenprofillinien, die über die Scheibenbreite verteilt sind. Es kann auch mit einer Laserlinie 4 gearbeitet werden, die sich über die Breite der Floatglas-Scheibe 1 erstreckt und die Länge der Floatglas-Scheibe 1 überstreicht (Figur 1f). Dadurch ist ein kontinuierliches oder quasikontinuierliches Gesamtprofil der Scheibenkrümmung zugänglich. Die relative Bewegung der Laserstrahlung zur Floatglas-Scheibe 1 ist in den Figuren 1e und 1f durch den Blockpfeil B dargestellt. Die relative Bewegung kann durch Bewegung der Laserstrahlung über die ortsfeste Floatglas-Scheibe 1 erreicht werden (statische Durchführung mit bewegter Laserstrahlung) oder durch Bewegung der Floatglas-Scheibe 1 unter der Laserstrahlung (Durchlaufverfahren).

Ein Laserspot 2 kann erzeugt werden durch Fokussierung der Laserstrahlung mittels einer sphärisch gekrümmten Linse. Der Laserspot 2 bildet sich im Brennpunkt der Linse aus (sofern sie kollimiert in die Linse eintritt). Eine Laserlinie 3 kann erzeugt werden durch Fokussierung der Laserstrahlung mittels einer Zylinderlinse, eines diffraktiven optischen Elements (DOE) oder eines holografischen optischen Elements (HOE). Die Laserlinie 3 bildet sich in der Brennlinie der Linse aus. Statt die Strahlung eines einzelnen Lasers zu einer Laserlinie 3 zu formen, die sich über die gesamte Scheibenbreite erstreckt, ist es äquivalent möglich, mehrere Laser zu verwendet, die jeweils eine Laserlinie 3 mit geringerer Breite erzeugen, und diese Laserlinien 3 benachbart zueinander entlang der Scheibenbreite anzuordnen, wobei die einzelnen Laserlinien 3 ebenfalls an der Scheibenbreite ausgerichtet sind. Idealerweise überlappen die Laserlinien 3 einander, um insgesamt eine Laserstrahlung zu erzeugen, die sich über die gesamte Scheibenbreite erstreckt. Grundsätzlich können die Laserlinien 3 aber auch voneinander beabstandet sein. Dann ergeben sich flächige Profile der Scheibenkrümmung mit einem gewissen Abstand zueinander.

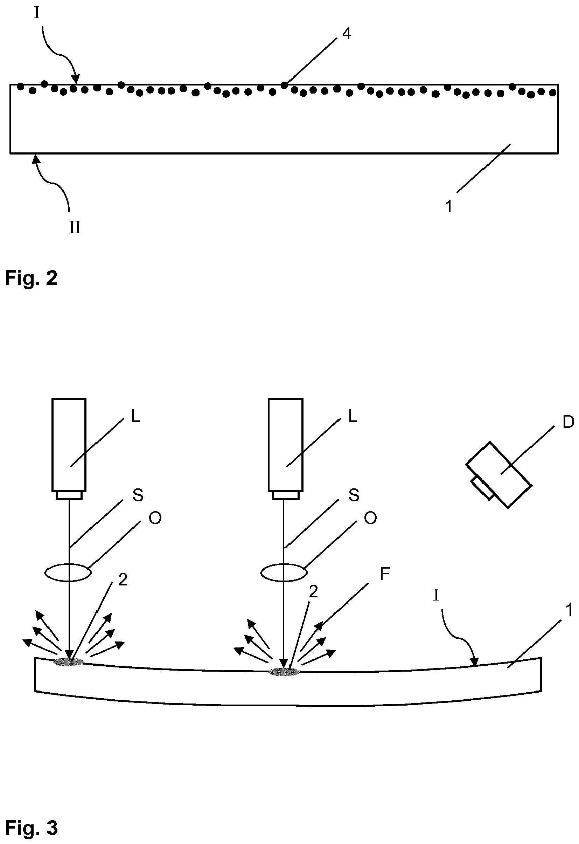

Figur 2 zeigt einen Querschnitt durch eine Floatglas-Scheibe 1. Die Floatglas-Scheibe 1 besteht aus Kalk-Natron-Glas, weist beispielsweise eine Dicke von 3 mm auf und ist im Floatverfahren gefertigt. Dabei wird die Glasschmelze auf ein Bad aus flüssigem Zinn gegossen, wo sie sich gleichmäßig verteilt und aushärtet. Die Oberfläche der entstehenden Floatglas-Scheibe 1, die direkten Kontakt zum Zinnbad hatte, wird als Zinnbadseite 1 bezeichnet, die gegenüberliegende Oberfläche als Atmosphärenseite II. Über die Zinnbadseite 1 können Zinnatome während des Floatverfahrens in die Floatglas-Scheibe 1 diffundieren oder an ihr anhaften. Durch diese verbleibenden Zinnreste 4 unterscheidet sich die Zinnbadseite 1 von der Atmosphärenseite II. Die Zinnreste 4 können zur Fluoreszenz angeregt werden, was die Grundlage des erfindungsgemäßen Messverfahrens ist.

Figur 3 zeigt einen Querschnitt durch eine gekrümmte Floatglas-Scheibe 1 während einer Ausführung des erfindungsgemäßen Verfahrens. Die Strahlung S zweier Laser L ist jeweils als Laserspot 2 auf die Zinnbadseite 1 fokussiert mittels einer sphärischen Linse als fokussierendes Element O. Statt zweier Laser L kann auch ein einzelner Laser L verwendet werden, dessen Strahlung beispielsweise mittels eines Strahlteilerplättchens oder -würfels auf die beiden Laserspots 2 aufgeteilt wird. Jeder Laserspot 2 regt Fluoreszenzstrahlung F an, welche mittels eines Detektors D detektiert wird.

Diese Konfiguration kann für verschiedene Ausführungsformen des erfindungsgemäßen Verfahrens angewandt werden. In einer ersten bevorzugten Ausführung ist der Detektor D eine 3D-Kamera, mit der ein dreidimensionales Bild der beiden Fluoreszenzpunkte erzeugt wird. Aus diesem lässt sich die relative Positionierung der beiden Messpunkte zueinander bestimmen.

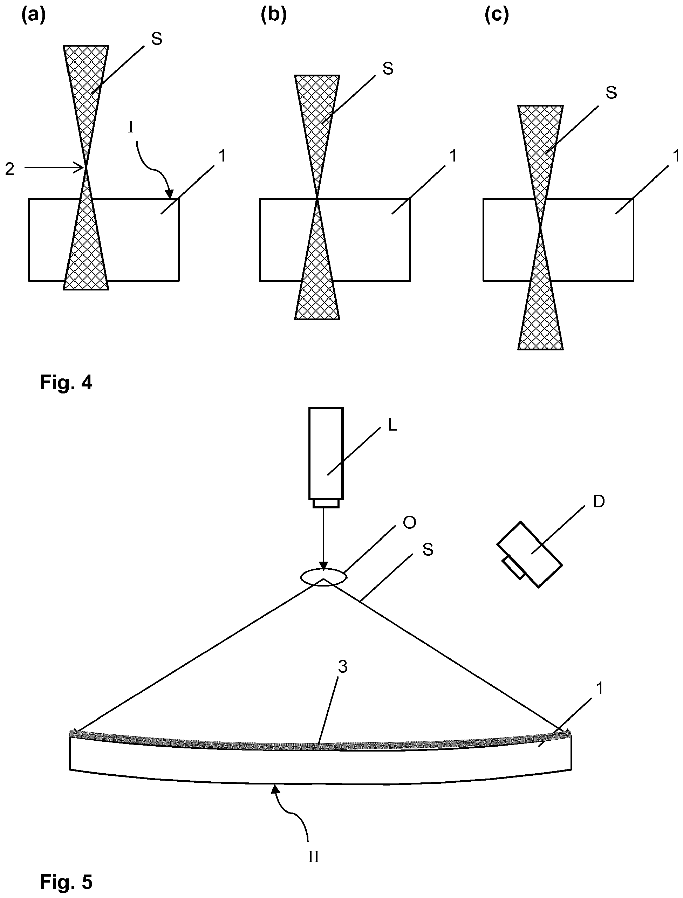

In einer zweiten bevorzugten Ausführung wird jeder Laserspot 2, also jeder Laserfokus entlang der optischen Achse (Strahlungsrichtung der einfallenden Laserstrahlung S) bewegt und überstreicht dabei die Zinnbadseite I, wie es schematisch in Figur 4 gezeigt ist ("z-Scan"). Ist der Laserspot 2 auf die Scheibenoberfläche fokussiert (Figur 4b), so wird ein kleinerer Bereich mit höherer Intensität angeregt als wenn der Laserspot 2 oberhalb oder unterhalb der Scheibenoberfläche fokussiert ist (Figur 4a, 4c). Dies kann auf zweierlei Arten ausgenutzt werden, um die Position der Scheibenoberfläche zu lokalisieren, wenn die Fluoreszenz während des z-Scans detektiert wird. Ist die Intensität der Laserstrahlung S ausreichend gering, dass die Fluoreszenzintensität nicht gesättigt ist, so kann die Fluoreszenzintensität während des z-Scans beobachtet werden. Bei maximaler Fluoreszenzintensität ist die Laserstrahlung S auf die Zinnbadseite 1 fokussiert, deren Position damit bestimmbar ist. Dies liegt darin begründet, dass die Fluoreszenzintensität direkt proportional zur Anregungsintensität ist, welche wiederum von der Fokusposition abhängig ist. Alternativ kann mit einem ortsaufgelösten Detektor D, beispielsweise einem CCD-Chip, die Ausdehnung der fluoreszierenden Fläche beobachtet werden. Bei minimaler beobachteter Fläche ist die Laserstrahlung S auf die Zinnbadseite 1 fokussiert. Diese Variante ist auch möglich, wenn aufgrund hoher Laserintensität Fluoreszenzsättigung vorliegt und dann besonders bevorzugt.

In der zweiten bevorzugten Ausführung ist es nicht nötig, dass die beiden Messpunkte simultan angeregt werden. Stattdessen können die beiden (oder mehr) Messpunkte auch sequentiell vermessen werden, beispielsweise mit demselben Laser L, der nacheinander auf die beiden Messpunkte gerichtet wird. Der Einfachheit halber ist das Verfahren in Figur 3 mit nur zwei Messpunkten dargestellt. Eine Erhöhung der Anzahl der Laserspots 2 ermöglicht eine genauere Vermessung der Krümmungsgeometrie.

Die Ausführung beider Ausführungsformen kann statisch mit ortsfester Floatglas-Scheibe 1 (sowohl rein statisch als auch statisch mit bewegter Laserstrahlung) oder als Durchlaufverfahren erfolgen.

Figur 5 zeigt einen Querschnitt durch eine gekrümmte Floatglas-Scheibe 1 während einer weiteren Ausführung des erfindungsgemäßen Verfahrens. Die Strahlung S eines Lasers L wird mittels einer Zylinderlinse als fokussierendes Element O zu einer Laserlinie 3 fokussiert, die sich über die Breite der Floatglas-Scheibe 1 erstreckt. Als Detektor wird eine 3D-Kamera verwendet, die ein dreidimensionales Bild des erzeugten Fluoreszenzbereichs aufnimmt, welches als Profillinie der Scheibenkrümmung analysiert werden kann.

Die Ausführung kann statisch mit ortsfester Floatglas-Scheibe 1 (sowohl rein statisch als auch statisch mit bewegter Laserstrahlung) oder als Durchlaufverfahren erfolgen.

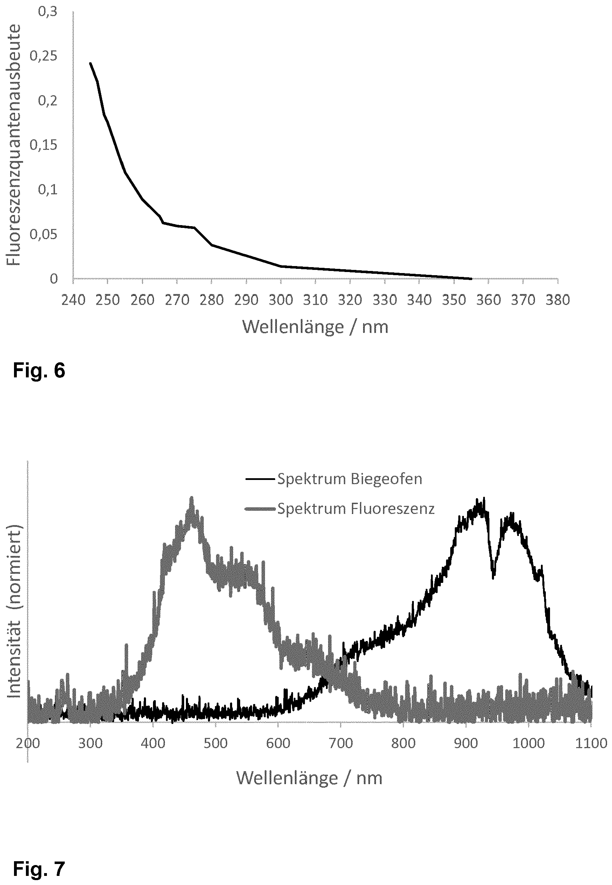

Figur 6 zeigt ein Diagramm der Fluoreszenzquantenausbeute der Zinnreste 4, aufgetragen gegen die Wellenlänge der Anregungsstrahlung. Die Fluoreszenzquantenausbeute wurde an der Zinnbadseite 1 einer Floatglas-Scheibe 1 gemessen. Bei Wellenlängen kleiner etwa 360 nm kann eine Fluoreszenzanregung stattfinden. Mit abnehmender Wellenlänge nimmt die Quantenausbeute zu, so dass gleiche Anregungsintensität zu einer intensiveren Fluoreszenzemission führt. Besonders im UV-C-Bereich von 100 nm bis 280 nm werden die Zinnreste effizient zur Fluoreszenz angeregt. Beispielsweise kann mit einem zweifach frequenzverdoppelten Nd:YAG-Laser (266 nm) eine gute Fluoreszenzanregung erfolgen. Will man eine zu hohe Anregung vermeiden, beispielsweise um Fluoreszenzsättigung zu umgehen, so kann die Anregungsleistung abgeschwächt werden oder bei höheren Wellenlängen gearbeitet werden (geringere Quantenausbeute).

Figur 7 zeigt das Spektrum der Wärmestrahlung eines beispielhaften industriellen Biegeofens ("Spektrum Biegeofen") im Vergleich zum Fluoreszenzspektrum der Zinnbadseite einer Floatglas-Scheibe 1 ("Spektrum Fluoreszenz"). Das Fluoreszenzspektrum wurde nach Anregung mit einer UV-C-LED aufgenommen, die eine nominelle Strahlungswellenlänge um 255 nm aufwies. Es ist zu erkennen, dass die Wärmestrahlung im Vergleich zur Fluoreszenzstrahlung deutlich rotverschoben ist. Die Wärmestrahlung setzt bei etwa 600 nm ein. Ihr eventuell störender Einfluss kann daher einfach herausgefiltert werden bei der erfindungsgemäßen Messung, beispielsweise durch Verwendung eines Kurzpassfilters mit einer Filterkante bei etwa 550 nm im Detektionsstrahlengang. Durch einen zusätzlichen Langpassfilter können auch UV-Anteile herausgefiltert werden, beispielsweise gestreute Anregungsstrahlung. Die Kombination aus Langpassfilter und Kurzpassfilter kann auch durch einen entsprechenden Bandpassfilter ersetzt werden.

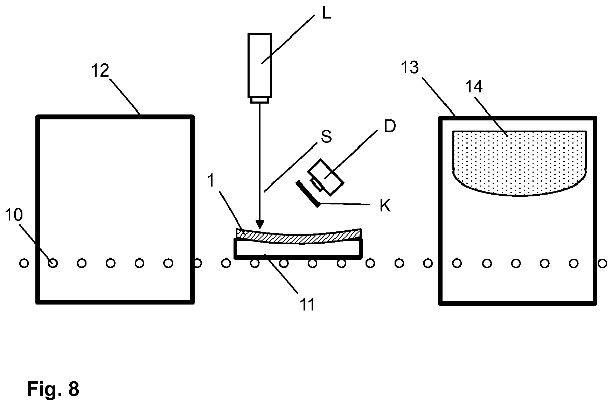

Figur 8 zeigt schematisch einen Querschnitt durch eine Biegevorrichtung mit einer integrierten erfindungsgemäßen Vorrichtung zum Messen der Scheibengeometrie. Die Biegevorrichtung ist für ein zweistufiges Biegeverfahren vorgesehen, wobei die Floatglas-Scheibe 1 in einer ersten Biegekammer 12 vorgebogen wird und in einer zweiten Biegekammer 13 in die endgültige Form gebogen. Die Floatglas-Scheibe wird mittels eines Transportsystems 10, beispielsweise einem Rollenfördersystem, aufliegend auf einer Schwerkraftbiegeform 11 in die erste Biegekammer 12 hineingefahren und dort mittels Schwerkraftbiegung vorgebogen. Die Schwerkraftbiegeform 11 samt Floatglas-Scheibe 1 wird dann von der ersten Biegekammer 12 zur zweiten Biegekammer 13 transportiert, wo sie durch Pressbiegen zwischen einer oberen Pressbiegeform 14 und einer komplementären unteren Form (beispielsweise der Schwerkraftbiegeform 11 oder eine weitere Form, auf die sie vorher übergeben wird) endgebogen. Zwischen der ersten Biegekammer 12 und der zweiten Biegekammer 13 ist eine erfindungsgemäße Messvorrichtung installiert, mit dem Laser L und dem Detektor D. Beim Transport der Floatglas-Scheibe 1 kann damit ihre Krümmungsgeometrie nach der Vorbiegung bestimmt werden. Je nach Grad der Vorbiegung können die Parameter des Pressbiegeschritts angepasst werden, beispielsweise die Biegetemperatur oder der Pressdruck. Dadurch können Abweichungen zur spezifizierten Krümmung, die im Rahmen von Massenprozessen gemäß einer Streuung auftreten, reduziert werden.

Im Strahlengang des Detektors D ist ein Kurzpassfilter K angeordnet mit einer Filterkante bei beispielsweise 550 nm. Der Kurzpassfilter lässt einen Großteil des Fluoreszenzspektrums passieren, während die längerwellige thermische Strahlung der Biegekammern herausgefiltert wird. Eine Störung der Messung durch die thermische Strahlung wird dadurch vermieden.

### Bezugszeichenliste:

- (1): Floatglas-Scheibe
- (2): Laserspot
- (3): Laserlinie
- (4): Zinnrest

- (10): Transportsystem für Floatglas-Scheiben 1
- (11): Schwerkraftbiegeform
- (12): erste Biegekammer
- (13): zweite Biegekammer
- (14): Pressbiegeform

- (L): Laser
- (S): Strahlung des Lasers L
- (F): Fluoreszenzstrahlung der Zinnreste 4
- (D): Detektor
- (O): fokussierendes Element
- (K): Kurzpassfilter

- (B): Richtung der relativen Bewegung der Strahlung S auf der Floatglas-Scheibe 1

- (I): Zinnbadseite der Floatglas-Scheibe 1
- (II): Atmosphärenseite der Floatglas-Scheibe 1

## Patentansprüche

1. Verfahren zur Messung der Geometrie einer gekrümmten Floatglas-Scheibe (1), welche eine Zinnbadseite (I) und eine Atmosphärenseite (II) aufweist, wobei
a) die Strahlung (S) mindestens eines Lasers (L) auf mindestens zwei Punkte der Zinnbadseite (I) fokussiert wird, wobei Zinnreste (4) zur Fluoreszenz angeregt werden,
b) die Fluoreszenzstrahlung (F) mittels eines Detektors (D) detektiert wird, woraus die räumliche Position der mindestens zwei Punkte bestimmt wird.

2. Verfahren nach Anspruch 1, wobei die Strahlung (S) des Lasers (L) eine Wellenlänge im UV-Spektralbereich von höchstens 360 nm aufweist, bevorzugt von 240 nm bis 355 nm, ganz besonders bevorzugt von 240 nm bis 300 nm.

3. Verfahren nach Anspruch 1 oder 2, wobei die Strahlung (S) des mindestens einen Lasers (L) auf die Zinnbadseite (I) fokussiert wird und wobei der Detektor (D) eine 3D-Kamera ist, welche die Fluoreszenzstrahlung (F) der mindestens zwei Punkte simultan detektiert, um die räumliche Position der mindestens zwei Punkte zu bestimmen.

4. Verfahren nach Anspruch 3, wobei die Strahlung (S) in Form mindestens zweier Laserspots (2), mindestens einer Laserlinie (3) oder mindestens eines relativ zur Floatglas-Scheibe (1) bewegten Laserspots (2) fokussiert ist, um die mindestens zwei Punkte zu bestrahlen.

5. Verfahren nach Anspruch 1 oder 2, wobei der Fokus der Strahlung (S) des mindestens einen Lasers (L) entlang der optischen Achse durch die Floatglas-Scheibe (1) über die Zinnbadseite (I) bewegt wird, wobei mit dem Detektor (D) kontinuierlich die Fluoreszenzstrahlung (F) detektiert wird, um die räumliche Position der mindestens zwei Punkte zu bestimmen.

6. Verfahren nach Anspruch 5, wobei die Strahlung (S) in Form mindestens zweier Laserspots (2) oder mindestens eines relativ zur Floatglas-Scheibe (1) bewegten Laserspots (2) fokussiert ist, um die mindestens zwei Punkte zu bestrahlen.

7. Verfahren nach Anspruch 5 oder 6, wobei der Detektor (D) eine Photodiode, ein Photomultiplier oder ein ortsaufgelöster Photodetektor, beispielsweise ein CCD- oder CMOS-Sensor oder ein Photodioden-Array, ist.

8. Verfahren nach einem der Ansprüche 5 bis 7, wobei die räumliche Position der mindestens zwei Punkte durch Messung der maximalen Intensität der Fluoreszenzstrahlung (F) bestimmt wird.

9. Verfahren nach einem der Ansprüche 5 bis 7, wobei der Detektor (D) ein ortsaufgelöster Photodetektor ist und wobei die räumliche Position der Zinnbadseite (I) durch Messung der fluoreszierenden Fläche bestimmt wird.

10. Verfahren nach einem der Ansprüche 1 bis 9, das als Durchlaufverfahren durchgeführt wird, wobei die Floatglas-Scheibe (1) unter der Strahlung (S) bewegt wird, so dass die Strahlung (S) die gesamte Länge der Floatglas-Scheibe (1) in Bewegungsrichtung überstreicht, wobei die Fluoreszenzstrahlung (F) mittels des Detektors (D) detektiert wird, um die räumliche Position des bestrahlten Bereichs ortsabhängig zu bestimmen.

11. Verfahren nach einem der Ansprüche 1 bis 10, das zwischen zwei Biegeschritten eines mehrstufigen Biegeverfahrens durchgeführt wird, wobei bevorzugt die Parameter des zweiten Biegeschritts an die gemessene Geometrie der Floatglas-Scheibe (1) angepasst wird.

12. Verfahren nach Anspruch 11, wobei zur Detektion der Fluoreszenzstrahlung (F) mittels des Detektors (D) ein optischer Filter verwendet wird mit einer Filterkante von höchstens 600 nm, bevorzugt von 500 nm bis 600 nm, oberhalb derer Strahlung geblockt wird, insbesondere ein Kurzpassfilter (K) oder ein Bandpassfilter.

13. Verfahren nach Anspruch 11 oder 12, wobei in dem mehrstufigen Biegeverfahren zwei Floatglas-Scheiben (1) übereinanderliegend simultan gebogen werden und wobei die Messung der Geometrie an beiden Floatglas-Scheiben (1) simultan erfolgt.

14. Vorrichtung zur Messung der Geometrie einer gekrümmten Floatglas-Scheibe (1), welche eine Zinnbadseite (I) und eine Atmosphärenseite (II) aufweist, umfassend
- einen Laser (L), dessen Strahlung (S) geeignet ist, auf mindestens zwei Punkte der Zinnbadseite (I) fokussiert zu werden und dabei Zinnreste (2) zur Fluoreszenz anzuregen,
- einen auf die mindestens zwei Punkte gerichteten Detektor (D), der geeignet ist, die Fluoreszenzstrahlung (F) zu detektieren,
- eine Auswerteeinheit, die geeignet ist, aus der Fluoreszenzstrahlung (F) die räumliche Position der mindestens zwei Punkte zu bestimmen.

15. Vorrichtung nach Anspruch 14, die zwischen einer ersten Biegekammer (12) und einer zweiten Biegekammer (13) angeordnet ist, und die ein Transportsystem (10) zur Bewegung der Floatglas-Scheibe (1) von der ersten Biegekammer (12) durch die Vorrichtung zur Messung der Geometrie zur zweiten Biegekammer (13) aufweist.
